# EUROPÄISCHE PATENTSCHRIFT

(11) **EP 3 908 500 B1**
(45) Veröffentlichungstag und Bekanntmachung des Hinweises auf die Patenterteilung: **06.03.2024**
(21) Anmeldenummer: 20700200.7
(22) Anmeldetag: 07.01.2020
(51) Int. Cl.: B62D 1/189, B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 10.01.2019 DE 102019200250
(43) Veröffentlichungstag der Anmeldung: 17.11.2021
(73) Patentinhaber: thyssenkrupp Presta AG, 9492 Eschen (LI); thyssenkrupp AG, 45143 Essen (DE)
(72) Erfinder: RAICH, Thomas, 6773 Vandans (AT); XUE, Zhengjie, Shanghai 201315 (CN)
(74) Vertreter: thyssenkrupp Intellectual Property GmbH
(86) Internationale Anmeldenummer: PCT/EP2020/050202
(87) Internationale Veröffentlichungsnummer: WO 2020/144177

(56) Entgegenhaltungen:
- DE-A1-102009 038 285
- DE-A1-102015 224 602
- DE-B3-102012 104 644
- US-A1- 2012 180 594
- US-A1- 2019 061 803

## Beschreibung

### Stand der Technik

Die Erfindung betrifft eine Lenksäule für ein Kraftfahrzeug, umfassend einen Führungskasten, in dem eine Lenkspindel um eine Längsachse drehbar gelagert ist und der von einer mit der Karosserie eines Kraftfahrzeugs verbindbaren Trageinheit verstellbar gehalten ist, mit einem Schwenklager, in dem der Führungskasten in einem vorderen Bereich um eine horizontal quer zur Längsachse liegende Schwenkachse verschwenkbar gelagert ist, und einem Stellhebel, der in einem ersten Hebellager in einem hinteren Bereich des Führungskastens und in einem zweiten Hebellager an der Trageinheit gelagert ist, wobei das Schwenklager quer zur Schwenkachse in einer zur Längsachse parallelen Verschiebeebene verschiebbar gelagert ist.

Zur Anpassung der Lenkradposition an die Sitzposition des Fahrers eines Kraftfahrzeugs sind verstellbare Lenksäulen in unterschiedlichen Ausführungsformen im Stand der Technik bekannt. Das am hinteren Ende der Lenkspindel angebrachte Lenkrad kann bei gattungsgemäßen Lenksäulen durch eine Höhenverstellung quer zur Richtung der Lenkspindel-Längsachse nach oben oder unten vertikal im Fahrzeuginnenraum positioniert werden.

Zur Höhenverstellung ist der Führungskasten, auch als Manteleinheit oder äußeres Mantelrohr bezeichnet, in seinem in Fahrtrichtung vorderen, bezogen auf die Lenkradposition unteren Endbereich um eine horizontal, und damit quer zur Längsachse liegende Schwenkachse, die Höhenverstellachse, in einem Schwenklager verschwenkbar an einer an der Karosserie anbringbaren Trageinheit gelagert.

Um die Verstellbewegung zu ermöglichen, ist der Führungskasten in seinem in Fahrtrichtung hinteren Bereich über einen Schwenkhebel, auch Höhenverstellhebel genannt, gelenkig mit der Trageinheit verbunden. Der Stellhebel ist um eine erste, parallel zur Schwenkachse liegende erste Hebelachse in einem ersten Hebellager in einem hinteren Bereich des Führungskastens, und um eine parallel zur ersten Hebelachse liegende zweite Hebelachse in einem zweiten Hebellager an der Trageinheit horizontal verschwenkbar gelagert.

Der Stellhebel kann bevorzugt mittels eines motorischen Verstellantriebs relativ zur Trageinheit und zum Führungskasten in den Hebelachsen rotiert werden, wodurch der hintere Bereich des Führungskastens zur Höhenverstellung relativ zur Trageinheit nach oben oder unter verstellt werden kann. Der Verstellantrieb umfasst beispielsweise einen elektromotorisch angetriebenen Spindeltrieb, der an dem Stellhebel angreift, wie im Stand der Technik beispielsweise in der DE 10 2007 039 361 B4 oder der US 2018/0086363 A1 beschrieben ist.

Dadurch, dass die zweite Hebelachse Abstand zur Schwenkachse und zur ersten Hebelachse hat, verändert sich beim Verschwenken zur Höhenverstellung der Abstand zwischen der Schwenkachse und der zweiten Hebelachse. Zum Ausgleich dieser translatorischen Verlagerung ist in dem genannten Stand der Technik vorgeschlagen worden, zwischen dem Stellhebel und dem Führungskasten eine Ausgleichsführung auszubilden, welche beim Verstellen eine lineare Ausgleichsbewegung der ersten Hebelachse in Richtung der Längsachse relativ zum Führungskasten zulässt.

Die bekannte Ausgleichsführung umfasst eine lineare Gleitführung, welche eine translatorische Ausgleichsbewegung der ersten Hebelachse relativ zum Führungskasten ermöglicht. Durch die Ausgleichführung erhält der Stellhebel zusätzlich zur Rotation um die beiden Hebellager einen weiteren relativen Freiheitsgrad der Bewegung, wodurch die Relativbewegung ausgeglichen werden kann. Dadurch, dass die Ausgleichsführung sich in Reihe zwischen den Hebellagern befindet, kann jedoch die Steifigkeit der durch den Stellhebel bewirkten Verbindung und die Resonanzfrequenz beeinträchtigt werden, was sich nachteilig auf die Steifigkeit und Eigenfrequenz der Lenksäule auswirken kann.

Eine Lenksäule der eingangs genannten Art ist im Stand der Technik beispielsweise aus der DE 10 2015 224602 A1 oder der DE 10 2012 104 644 B3 bekannt. Dabei können die Abmessungen und das Gewicht des Führungskastens durch die Konstruktion des Schwenklagers vergrößert sein.

Angesichts der vorangehend erläuterten Problematik ist es eine Aufgabe der vorliegenden Erfindung, eine verbesserte höhenverstellbare Lenksäule anzugeben, die eine erhöhte Steifigkeit und Resonanzfrequenz hat.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Bei einer Lenksäule für ein Kraftfahrzeug, umfassend einen Führungskasten, in dem eine Lenkspindel um eine Längsachse drehbar gelagert ist und der von einer mit der Karosserie eines Kraftfahrzeugs verbindbaren Trageinheit verstellbar gehalten ist, mit einem Schwenklager, in dem der Führungskasten in einem vorderen Bereich um eine horizontal quer zur Längsachse liegende Schwenkachse verschwenkbar gelagert ist, und einem Stellhebel, der in einem ersten Hebellager in einem hinteren Bereich des Führungskastens und in einem zweiten Hebellager an der Trageinheit gelagert ist, wobei das Schwenklager quer zur Schwenkachse in einer zur Längsachse parallelen Verschiebeebene verschiebbar gelagert ist erfindungsgemäß vorgesehen, dass das Schwenklager ein relativ zur Trageinheit verschiebbar geführtes Lagerelement aufweist, in dem ein Lagerbolzen des Schwenklagers drehbar gelagert ist, wobei der das Lagerelement durchsetzende Lagerbolzen relativ zum Führungskasten translatorisch fixiert ist.

Erfindungsgemäß ist ein das Lagerelement durchsetzender Lagerbolzen relativ zum Führungskasten translatorisch fixiert sein. Dadurch kann das Lagerelement bezüglich translatorischer Verschiebung an dem Führungskasten durch den Lagerbolzen festgelegt werden, wobei es sich in der länglichen Ausgleichsöffnung in der Trageinheit zur Ausführung der Ausgleichsbewegung translatorisch relativ zur Trageinheit bewegen kann. Der Lagerbolzen kann als Schraubbolzen ausgebildet sein, wobei jeweils ein Lagerbolzen jeweils eine Ausgleichsöffnung einer Seitenwange durchsetzt und in einem Gewinde an dem Führungskasten festgelegt ist. In einer alternativen Ausführungsform kann es vorgesehen sein, dass ein einziger Bolzen vorgesehen ist, der sich durch die beiden Ausgleichsöffnungen der Seitenwangen und einer Öffnung des Führungskastens und den beiden Lagerelementen erstreckt.

Bei der Erfindung können die beiden Hebellager des Stellhebels als reine Rotationslager ausgeführt sein, die mit engen Toleranzen und entsprechend geringem Lagerspiel hinreichend leichtgängig ausgelegt werden können. Dadurch kann eine hohe Steifigkeit der gelenkigen Verbindung mittels des Stellhebels realisiert werden. Die potentiellen Probleme im Stand der Technik durch den zusätzlichen translatorischen Freiheitsgrad des Stellhebels können bei der Erfindung effektiv vermieden werden.

Zum Ausgleich der beim Verstellen auftretenden Relativbewegung weist das Schwenklager durch das Schwenklager erfindungsgemäß einen zusätzlichen Freiheitsgrad auf, nämlich in Richtung einer translatorischen Bewegung parallel zu der Verschiebeebene, die sich normal, d.h. senkrecht zur Schwenkachse parallel zur Längsachse erstreckt, so dass eine relative Ausgleichbewegung der Schwenklagerung des Führungskastens relativ zur Trageinheit ermöglicht wird.

Ein Vorteil der Erfindung ist, dass das Ausgleichslager direkt am Schwenklager zwischen Führungskasten und Trageinheit eingegliedert werden kann, und somit eine Verbindung mit jeweils nur einer jeweils einfach rotatorischen und translatorischen Lagerung realisiert wird, im Unterschied zum Stand der Technik mit der translatorischen und den zwei rotatorischen Lagerungen am Stellhebel. Durch die kürzere Toleranzkette der Lagerungen können eine geringere Gesamt-Toleranz und entsprechend eine höhere Steifigkeit erreicht werden.

Ein weiterer Vorteil ist, dass im Bereich des Schwenklagers ein größerer Bauraum zur Realisierung eines erfindungsgemäßen Kombination von Schwenk- und Schiebelagerung zur Verfügung steht. Durch eine entsprechend größere Dimensionierung ist es einfacher möglich, die Anforderungen an eine möglichst hohe Steifigkeit der Lagerung konstruktiv zu erfüllen. Darüber hinaus werden das Schwenklager und die erfindungsgemäß damit kombinierte Schiebelagerung in geringerem Umfang durch Querkräfte belastet, die im Betrieb über das Lenkrad und die Lenkspindel auf den Führungskasten ausgeübt werden und von der Lagerung aufgenommen werden. Durch die im Vergleich zum Stand der Technik größere Steifigkeit der Lagerung des Stellhebels werden nämlich Querkräfte zumindest teilweise von den Hebellagern des Stellhebels aufgenommen und von dem Schwenklager abgehalten. Dies trägt ebenfalls zu einer höheren Steifigkeit der Lenksäule bei.

Die Erfindung sieht vor, dass das Schwenklager ein relativ zur Trageinheit verschiebbar geführtes Lagerelement aufweist, in dem ein Lagerbolzen des Schwenklagers drehbar gelagert ist. Das Lagerelement weist das Drehlager auf, beispielsweise eine Lagerbohrung für den Lagerbolzen des Schwenklagers. Dadurch, dass das Lagerelement in einer Schiebe- oder Linearführung parallel zur Verschiebeebene bewegbar gelagert ist, kann eine translatorische Ausgleichsbewegung bei der Höhenverstellung erfolgen. Um die Ausgleichsbewegung auszuführen, kann das Lagerelement relativ zur Trageinheit translatorisch verschiebbar sein, und bezüglich dieser Bewegungsrichtung an dem Führungskasten fixiert, oder bei einer nicht erfindungsgemäßen Ausführungsform auch umgekehrt, d.h. relativ zum Führungskasten translatorisch verschiebbar und fix mit der Trageinheit verbunden sein.

Vorzugsweise ist der Lagerbolzen in dem Lagerelement um die Schwenkachse drehbar gelagert. Die mögliche Rotations- und Translationsbewegung des Lagerbolzens erfolgt dann relativ zur Trageinheit, wenn das Lagerelement an dieser verschiebbar gelagert ist, oder relativ zum Führungskasten, wenn das Lagerelement daran verschiebbar gelagert ist. Alternativ ist es denkbar und möglich, dass der Lagerbolzen bezüglich Rotation um die Schwenkachse an dem Lagerelement fixiert ist, und mit diesem zusammen nur translatorisch verschiebbar ist, beispielsweise relativ zur Trageinheit. Dann kann die drehbare Lagerung relativ zum Führungskasten erfolgen. Umgekehrt ist auch eine nicht erfindungsgemäße drehbare Lagerung relativ zur Trageinheit und eine translatorische Lagerung relativ zum Führungskasten realisierbar.

Das Lagerelement bietet den Vorteil, dass es funktional getrennte Lagerflächen für die rotatorische Schwenklagerung des Lagerbolzens und der translatorischen Schiebelagerung baulich in sich vereinen kann.

Eine vorteilhafte Weiterbildung ist, dass an dem Lagerelement und an der Trageinheit aufeinander gleitende Gleitflächen ausgebildet sind. Die Gleitflächen bilden korrespondierende Lagerflächen einer Gleitführung, in der sich das Lagerelement zur Ausführung der Ausgleichsbewegung relativ zur Trageinheit gleitend translatorisch bewegen kann. Derartige Gleitführungen können mit geringem Aufwand und zuverlässiger Funktion realisiert werden.

Die Trageinheit, auch als Konsole bezeichnet, ist im Querschnitt bevorzugt U-förmig ausgebildet, mit zwei vertikal nach unten parallel zur Längsachse vorstehenden, einander bezüglich der Längsachse gegenüberliegenden Seitenwangen. Jede der Seitenwangen kann vorzugsweise eine Ausgleichsöffnung und Gleitflächen aufweisen.

Bevorzugt können die Gleitflächen keilförmig angeordnet sein. Die sich längs in Verschieberichtung erstreckenden Gleitflächen sind quer zur Verschieberichtung gegeneinander geneigt, so dass die Gleitführung einen im wesentlichen V- oder trapezförmigen Querschnitt erhält. Daran ist vorteilhaft, dass die Gleitführung eine in Verschieberichtung definierte Zwangsführung bildet. Dadurch, dass die Gleitflächen in Keilrichtung gegeneinander belastet werden, kann aufgrund der Keilwirkung mit geringer Andruckkraft eine spielfreie Einstellung der Gleitführung erfolgen, wodurch eine hohe Steifigkeit erreicht wird.

Zur Realisierung einer keilförmigen Gleitführung kann vorgesehen sein, dass eine Gleitfläche an dem Lagerelement konusmantelförmig koaxial zur Schwenkachse ausgebildet ist, und eine korrespondierende Gleitfläche an der Trageinheit längsseitig einer länglichen Ausgleichsöffnung ausgebildet ist, bevorzugt in einer paarweisen Anordnung entlang der Längsränder der Ausgleichsöffnung. Dabei weist das Lagerelement einen koaxial zum Lagerbolzen kegelförmig vorstehenden Abschnitt auf, der in die schlitzförmige, in Verschieberichtung langgestreckte Ausgleichsöffnung eintaucht. Mit seiner konischen Mantelfläche kontaktiert das Lagerelement die beiden in der Ausgleichöffnung einander gegenüberliegenden längsseitigen Seitenränder. Entlang dieser Längsränder können jeweils im Konuswinkel gegeneinander geneigte Gleitflächen angeordnet sein, an denen das konische Lagerelement anliegt. Ein Lagerbolzen kann jeweils mindestens ein Lagerelement koaxial und eine Ausgleichsöffnung durchsetzen. Dabei kann ein Lagerbolzen beispielsweise einen Gewindeabschnitt aufweisen, der in ein korrespondierendes Gewinde in dem Führungskasten eingeschraubt werden kann, um die konische Gleitfläche in der Ausgleichsöffnung zu verspannen. Ein Vorteil der konischen Gleitfläche ist, dass keine Justierung und Ausrichtung in Verschieberichtung relativ zur Ausgleichöffnung erforderlich ist, und ein Verkeilen praktisch ausgeschlossen ist.

Eine vorteilhafte Ausführung der Erfindung sieht vor, dass das Lagerelement ein quer zur Schwenkachse abstehendes Stützelement aufweist. Das Stützelement kann beispielsweise einen Bügel als Sicherungselement zur Sicherung gegen Rotation relativ zur Trageinheit, so dass es sich nur translatorisch in der Gleitführung bewegen kann. Der Bügel kann eine Seitenwange umgreifen, beispielsweise um eine parallel zur Erstreckung der Ausgleichsöffnung verlaufende Längskante, so dass das Lagerelement gegen Rotation um die Schwenkachse gesichert verschiebbar an der Seitenwange gehalten ist. Dadurch kann das Lagerelement gegen Herausfallen aus der Ausgleichsöffnung gesichert sein, wodurch die Montage vereinfacht wird. Vorzugsweise kann das Stützelement elastisch verformbar sein, so dass das Lagerelement mit dem Stützelement an der Seitenwange eingehakt und in die Ausgleichsöffnung eingeschnappt werden kann.

Vorzugsweise kann dass das Lagerelement aus Kunststoff ausgebildet sein, bevorzugt als Kunststoff-Spritzgussteil. Die aus Kunststoff beispielsweise an einem konischen Vorsprung ausgebildeten Gleitflächen können spielfrei, reibungs- und verschleißarm auf den Gleitflächen des üblicherweise aus Stahl gefertigten Führungskastens entlanggleiten. Die Fertigung als Kunststoff-Spritzgussteil ermöglicht es weiterhin, ein federnd-elastisches Stützelement einstückig mit dem Lagerelement auszubilden.

An dem Stellhebel kann ein motorischer Verstellantrieb angreifen. Dieser kann, wie es aus dem Stand der Technik an sich bekannt ist, einen motorisch antreibbaren Spindeltrieb umfassen, der an dem Führungskasten oder der Trageinheit abgestützt ist.

Bevorzugt ist der Führungskasten an der Trageinheit zwischen zwei parallel zur Verstellebene vertikal nach unten vorstehenden Seitenwangen gehalten, wobei jede der Seitenwangen ein Schwenklager aufweist. Die Ausgleichsöffnung kann sich jeweils in Richtung der Längsachse erstrecken.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer Seitenansicht,
- Figur 2: den Führungskasten der Lenksäule gemäß Figur 1,
- Figur 3: eine vergrößerte Detailansicht von Figur 1 im Bereich des Schwenklagers,
- Figur 4: eine Schnittansicht A-A durch das Schwenklager gemäß Figur 3,
- Figur 5: ein erfindungsgemäßes Lagerelement einer Lenksäule gemäß Figuren 1 bis 4 in Seitenansicht in Richtung der Schwenkachse,
- Figur 6: das Lagerelement gemäß Figur 5 in einer Vorderansicht quer zur Schwenkachse,
- Figur 7: die Trageinheit der Lenksäule gemäß Figuren 1 bis 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

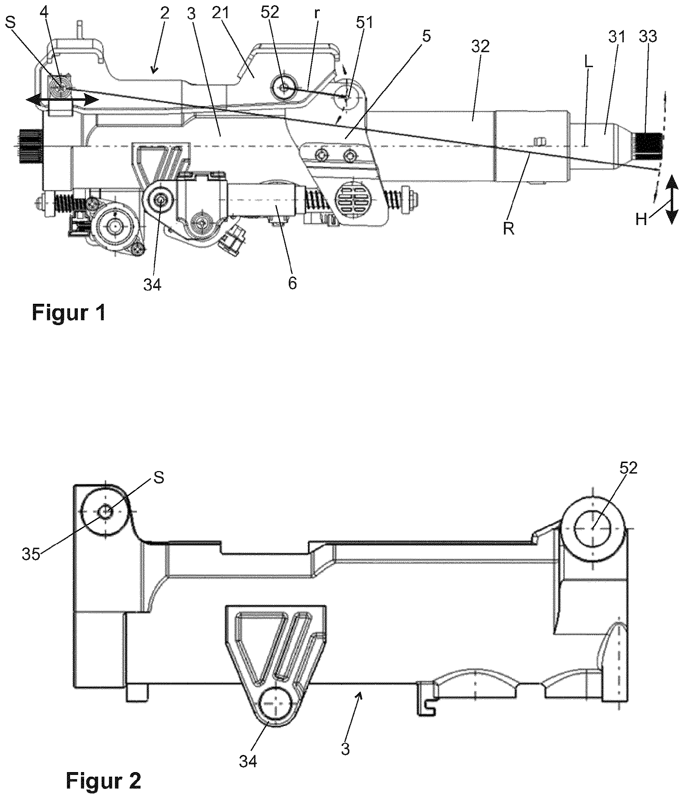

Figur 1 zeigt in einer Seitenansicht eine erfindungsgemäße Lenksäule 1, mit einer Trageinheit 2, auch als Konsole bezeichnet, die - in der gezeigten Darstellung mit ihrer Oberseite - an einer nicht dargestellten Karosserie eines Kraftfahrzeugs festlegbar ist, und an der ein Führungskasten 3 verstellbar gehalten ist.

Eine Lenkspindel 31 ist um eine Längsachse L drehbar in dem Führungskasten 3 und einem Mantelrohr 32 gelagert, und weist an seinem bezüglich der Fahrtrichtung hinteren Ende einen Befestigungsabschnitt 33 zur Anbringung eines nicht dargestellten Lenkrads auf. Das Mantelrohr 32 ist in Richtung der Längsachse L teleskopartig verstellbar in dem Führungskasten 3 gehalten, wodurch eine Längsverstellung des Lenkrads ermöglicht wird.

Die Trageinheit 2 ist im Querschnitt U-förmig ausgebildet mit zwei einander bezüglich der Längsachse L einander gegenüberliegenden Seitenwangen 21, zwischen denen der Führungskasten 3 aufgenommen ist.

Im vorderen Bereich ist der Führungskasten 3 an der Trageinheit 2 in einem Schwenklager 4 um eine Schwenkachse S gelagert, die horizontal, senkrecht zur Längsachse L steht und in Figur 1 senkrecht zur Zeichnungsebene gerichtet ist.

Im hinteren Bereich ist ein Stellhebel 5 angeordnet, der um eine erste Hebelachse 51 eines ersten Hebellagers an dem Führungskasten 3, und um eine zweite Hebelachse 52 eines zweiten Hebellagers an der Trageinheit 2 verschwenkbar gelagert ist. Die Hebelachsen 51 und 52 liegen parallel zur Schwenkachse S und haben einen Abstand der Hebellänge r voneinander.

Mittels eines Verstellantriebs 6, der als motorisch antreibbarer Spindeltrieb ausgebildet ist, der mit seinem einen Ende an einem Widerlager 34 am Führungskasten 3 und mit seinem anderen Ende an dem Stellhebel 5 angreift, kann der Stellhebel 5 in den Hebellagern 51 und 52 verschwenkt werden, wodurch der Befestigungsabschnitt 33 zur Höhenverstellung in Höhenrichtung H vertikal auf und ab verstellt werden kann. Dadurch wird der Führungskasten 3 um die Schwenkachse S rotiert, wobei das Schwenklager 4 aufgrund des Abstands zwischen Schwenkachse S und zweiter Hebelachse 52 relativ zur Trageinheit 2 eine translatorische bewegt wird, wie in Figur 1 mit den Pfeilen angedeutet ist.

Der Führungskasten 3 ist einzeln in Figur 2 gezeigt. Darin ist die Anordnung der Schwenkachse S relativ zur zweiten Hebelachse 52 erkennbar. Koaxial zur Schwenkachse weist der Führungskasten 3 eine Gewindebohrung 35 auf.

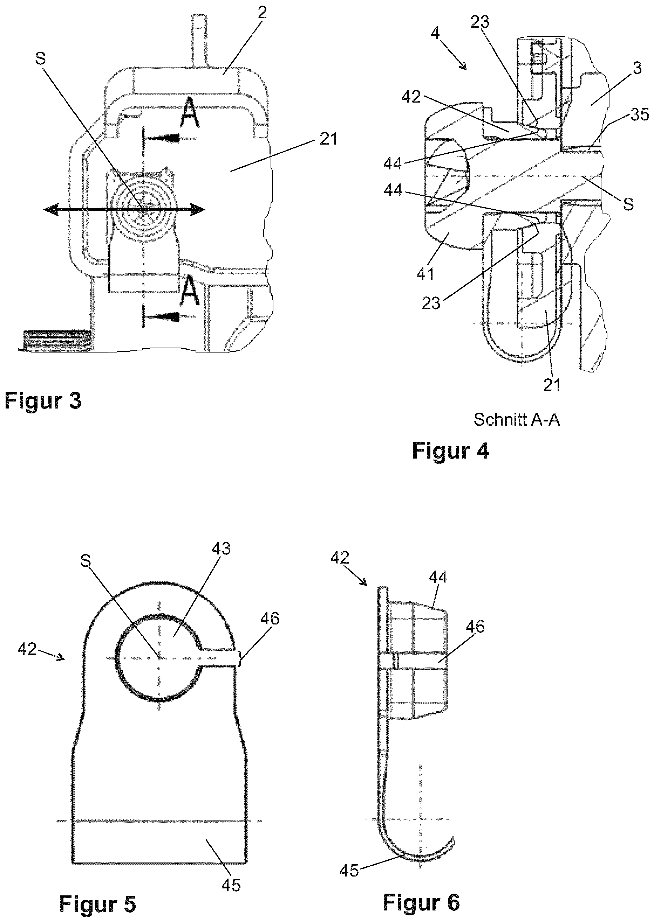

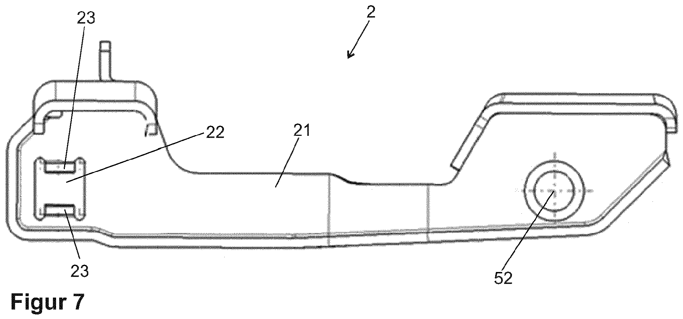

Figur 3 zeigt einen vergrößerten Ausschnitt aus Figur 1, und Figur 4 einen vertikalen Schnitt A-A durch die Schwenkachse S in einer Ansicht von hinten. Das darin dargestellte Schwenklager 4 umfasst einen koaxial zur Schwenkachse S angeordneten Lagerbolzen 41, der in die Gewindebohrung 35 des Führungskastens 3 eingeschraubt ist. Der Lagerbolzen 41 durchsetzt eine in der Seitenwange 21 ausgebildete längliche Ausgleichsöffnung 22 der Trageinheit 2. Die Ausgleichsöffnung 22 erstreckt sich längs der Lenksäule 1 in der vorgegebenen Verschieberichtung, beispielsweise in Richtung einer gedachten Verbindungslinie zwischen der Schwenkachse S und der zweiten Hebelachse 52, wie dies der einzelnen Darstellung der Trageinheit 2 in Figur 7 entnehmbar ist.

Der Lagerbolzen 41 ist in einem erfindungsgemäßen Lagerelement 42 in einer zur Schwenkachse S koaxialen Lagerbohrung 43 rotierbar gelagert.

Das Lagerelement 42 weist einen zur Lagerbohrung 43 koaxialen konischen Ansatz mit einer konusmantelförmigen Gleitfläche 44 auf, wie dies Figuren 5 und 6 entnehmbar ist, die das Lagerelement 42 in einer Ansicht in Richtung der Schwenkachse S (Figur 5) und quer dazu (Figur 6) zeigen.

Mit der konischen Gleitfläche 44 liegt das Lagerelement 42 an Gleitflächen 23 an der Außenseite einer Seitenwange 21 der Trageinheit 2 an, die in Richtung der Längserstreckung an den Rändern der Ausgleichöffnung 22 ausgebildet sind und keilförmig zueinander stehen, wie in Figur 4 erkennbar ist. Der Keilwinkel zwischen den Gleitflächen 23 entspricht dabei im Wesentlichen dem Kegelwinkel der Gleitfläche 44. Dadurch wird eine Gleitführung in der Verschieberichtung gebildet, in der sich das Lagerelement 42 translatorisch relativ zur Trageinheit 2 bewegen kann, wie in Figur 3 mit den Pfeilen angedeutet ist. Dadurch ist eine Ausgleichsbewegung zum Ausgleich der translatorischen Relativbewegung der Schwenkachse S relativ zur zweiten Hebelachse 52 bei der Höhenverstellung möglich.

Das Lagerelement 42 weist ein bezüglich der Lagerbohrung 43 seitlich abstehendes, bügelförmiges Stützelement 45 auf, welches die Außenkante der Seitenwange 21 umgreift, wie in Figur 4 erkennbar ist. Das Stützelement 45 ist elastisch, so dass das Lagerelement 42 in die Ausgleichöffnung 23 eingeschnappt werden kann und gehalten wird. Im montierten Zustand kann das Stützelement 45 in Verschieberichtung relativ zur Seitenwange 21 gleiten, und sichert dabei das Lagerelement 42 gegen Rotation.

Die Lageröffnung 43 des Lagerelements 42 kann durch einen Schlitz 46 nach außen geöffnet sein, wodurch sich die konusmantelförmige Gleitfläche 44 radial aufweiten und dadurch optimal mit den Gleitflächen 23 in Gleitkontakt gebracht werden kann.

Bevorzugt kann das Lagerelement 42 einstückig als Kunststoff-Spritzgussteil ausgebildet sein. Alternativ kann das Lagerelement 42 auch aus einem metallischen Werkstoff gebildet sein, beispielsweise aus einem Buntmetall.

### Bezugszeichenliste

- 1: Lenksäule
- 2: Trageinheit
- 21: Seitenwange
- 22: Ausgleichsöffnung
- 23: Gleitflächen
- 3: Führungskasten
- 31: Lenkspindel
- 32: Mantelrohr
- 33: Befestigungsabschnitt
- 34: Widerlager
- 35: Gewindebohrung
- 4: Schwenklager
- 41: Lagerbolzen
- 42: Lagerelement
- 43: Lagerbohrung
- 44: Gleitfläche
- 45: Stützelement
- 46: Schlitz
- 5: Stellhebel
- 51, 52: Hebelachse
- 6: Verstellantrieb

- L: Längsachse
- S: Schwenkachse
- H: Höhenrichtung

## Patentansprüche

1. Lenksäule (1) für ein Kraftfahrzeug, umfassend einen Führungskasten (3), in dem eine Lenkspindel (31) um eine Längsachse (L) drehbar gelagert ist und der von einer mit der Karosserie eines Kraftfahrzeugs verbindbaren Trageinheit (2) verstellbar gehalten ist, mit einem Schwenklager (4), in dem der Führungskasten (3) in einem vorderen Bereich um eine horizontal quer zur Längsachse (L) liegende Schwenkachse (S) verschwenkbar gelagert ist, und einem Stellhebel (5), der in einem ersten Hebellager (51) in einem hinteren Bereich des Führungskastens (3) und in einem zweiten Hebellager (52) an der Trageinheit (2) gelagert ist, wobei das Schwenklager (4) quer zur Schwenkachse (S) in einer zur Längsachse (L) parallelen Verschiebeebene verschiebbar gelagert ist
**dadurch gekennzeichnet,**
**dass** das Schwenklager (4) ein relativ zur Trageinheit (2) verschiebbar geführtes Lagerelement (42) aufweist, in dem ein Lagerbolzen (41) des Schwenklagers (4) drehbar gelagert ist, wobei der das Lagerelement (42) durchsetzende Lagerbolzen (41) relativ zum Führungskasten (3) translatorisch fixiert ist.

2. Lenksäule nach Anspruch 1, **dadurch gekennzeichnet, dass** an dem Lagerelement (42) und an der Trageinheit (2) aufeinander gleitende Gleitflächen (23, 44) ausgebildet sind.

3. Lenksäule nach Anspruch 2, **dadurch gekennzeichnet, dass** die Gleitflächen (23, 44) keilförmig angeordnet sind.

4. Lenksäule nach Anspruch 3, **dadurch gekennzeichnet, dass** eine Gleitfläche (44) an dem Lagerelement (42) konusmantelförmig koaxial zur Schwenkachse (S) ausgebildet ist, und eine korrespondierende Gleitfläche (23) an der Trageinheit (2) längsseitig einer länglichen Ausgleichsöffnung (22) ausgebildet ist, bevorzugt in einer paarweisen Anordnung entlang der Längsränder der Ausgleichsöffnung (22).

5. Lenksäule nach einem der vorangehenden Ansprüche, **dadurch gekennzeichnet, dass** das Lagerelement (42) ein quer zur Schwenkachse (S) abstehendes Stützelement (45) aufweist.

6. Lenksäule nach einem der vorangehenden Ansprüche, **dadurch gekennzeichnet, dass** das Lagerelement (42) aus Kunststoff ausgebildet ist.

7. Lenksäule nach einem der vorangehenden Ansprüche, **dadurch gekennzeichnet, dass** an dem Stellhebel (5) ein motorischer Verstellantrieb (6) angreift.

8. Lenksäule nach einem der vorangehenden Ansprüche, **dadurch gekennzeichnet, dass** der Führungskasten (3) an der Trageinheit (2) zwischen zwei parallel zur Verstellebene vertikal nach unten vorstehenden Seitenwangen (21) gehalten ist, wobei jede der Seitenwangen (21) ein Schwenklager (4) aufweist.

## Claims

1. Steering column (1) for a motor vehicle, comprising a guide box (3), in which a steering spindle (31) is mounted rotatably about a longitudinal axis (L) and which is held adjustably by a support unit (2) connectable to the body of a motor vehicle, with a pivot bearing (4), in which the guide box (3) is mounted pivotably in a front region about a pivot axis (S) lying horizontally transversely to the longitudinal axis (L), and an adjusting lever (5), which is mounted in a first lever bearing (51) in a rear region of the guide box (3) and in a second lever bearing (52) on the support unit (3), wherein the pivot bearing (4) is mounted so as to be displaceable transversely to the pivot axis (S) in a displacement plane parallel to the longitudinal axis (L)
**characterized in**
**in that** the pivot bearing (4) has a bearing element (42) which is guided displaceably relative to the support unit (2), and in which a bearing pin (41) of the pivot bearing (4) is rotatably mounted, wherein the bearing pin (41) passing through the bearing element (42) is fixed in translation relative to the guide box (3).

2. Steering column according to claim 1, **characterized in that** sliding surfaces (23, 44) sliding on one another are formed on the bearing element (42) and on the support unit (2).

3. Steering column according to claim 2, **characterized in that** the sliding surfaces (23, 44) are arranged in a wedge shape.

4. Steering column according to claim 3, **characterized in that** a sliding surface (44) on the bearing element (42) is formed in the shape of a conical shell coaxial to the pivot axis (S), and a corresponding sliding surface (23) on the supporting unit (2) is formed on the longitudinal side of an elongate compensating opening (22), preferably in a paired arrangement along the longitudinal edges of the compensating opening (22).

5. Steering column according to one of the preceding claims, **characterized in that** the bearing element (42) has a support element (45) projecting transversely to the pivot axis (S).

6. Steering column according to one of the preceding claims, **characterized in that** the bearing element (42) is made of plastic.

7. Steering column according to one of the preceding claims, **characterized in that** a motorized adjustment drive (6) acts on the adjusting lever (5).

8. Steering column according to one of the preceding claims, **characterized in that** the guide box (3) is held on the support unit (2) between two side cheeks (21) projecting vertically downwards parallel to the adjustment plane, each of the side cheeks (21) having a pivot bearing (4).

## Revendications

1. Colonne de direction (1) pour un véhicule automobile, comprenant un boîtier de guidage (3), dans lequel un axe de direction (31) est monté rotatif autour d'un axe longitudinal (L) et qui est maintenu réglable par une unité de support (2) reliée à la carrosserie d'un véhicule automobile, avec un palier de pivot (4), dans lequel le boîtier de guidage (3) est monté pivotant dans une zone avant autour d'un axe de pivot (S) se trouvant horizontalement transversalement à l'axe longitudinal (L), et un levier de réglage (5), qui est monté dans un premier palier de levier (51) dans une zone arrière du boîtier de guidage (3) et dans un second palier de levier (52) sur l'unité de support (3), dans lequel le palier de pivot (4) est monté de manière à pouvoir être déplacé transversalement à l'axe de pivot (S) dans un plan de déplacement parallèle à l'axe longitudinal (L).
**caractérisé en**
en ce que le palier de pivotement (4) comporte un élément de palier (42) qui est guidé en déplacement par rapport à l'unité de support (2), et dans lequel un axe de palier (41) du palier de pivotement (4) est monté rotatif, l'axe de palier (41) traversant l'élément de palier (42) étant fixé en translation par rapport à la boîte de guidage (3).

2. Colonne de direction selon la revendication 1, **caractérisée par le fait que** des surfaces de glissement (23, 44) glissant l'une sur l'autre sont formées sur l'élément de roulement (42) et sur l'unité de support (2).

3. Colonne de direction selon la revendication 2, **caractérisée par le fait que** les surfaces de glissement (23, 44) sont disposées en forme de coin.

4. Colonne de direction selon la revendication 3, **caractérisée en ce qu'**une surface de glissement (44) sur l'élément de roulement (42) est formée en forme de coquille conique coaxiale à l'axe de pivotement (S), et une surface de glissement correspondante (23) sur l'unité de support (2) est formée sur le côté longitudinal d'une ouverture de compensation allongée (22), de préférence dans une disposition en paires le long des bords longitudinaux de l'ouverture de compensation (22).

5. Colonne de direction selon l'une des revendications précédentes, **caractérisée en ce que** l'élément d'appui (42) comporte un élément de support (45) faisant saillie transversalement à l'axe de pivotement (S).

6. Colonne de direction selon l'une des revendications précédentes, **caractérisée par le fait que** l'élément porteur (42) est en matière plastique.

7. Colonne de direction selon l'une des revendications précédentes, **caractérisée par le fait qu'**une commande de réglage motorisée (6) agit sur le levier de réglage (5).

8. Colonne de direction selon l'une des revendications précédentes, **caractérisée en ce que** le boîtier de guidage (3) est maintenu sur l'unité de support (2) entre deux joues latérales (21) faisant saillie verticalement vers le bas parallèlement au plan de réglage, chacune des joues latérales (21) comportant un palier de pivotement (4).
